**Europäisches Patentamt**

**European Patent Office**

**Office européen des brevets**

(19)

(11) Veröffentlichungsnummer: **0 007 034**
**B1**

(12) **EUROPÄISCHE PATENTSCHRIFT**

(45) Veröffentlichungstag der Patentschrift: **13.01.82**

(21) Anmeldenummer: **79102129.8**

(22) Anmeldetag: **27.06.79**

(51) Int. Cl.³: **G 01 B 7/14, G 01 D 3/04, G 01 D 5/20, G 01 D 5/24**

(54) **Anordnung zur Messung des Abstandes zwischen einem metallischen Werkstück und einem Bearbeitungswerkzeug.**

(30) Priorität: **07.07.78 DE 2829851**

(43) Veröffentlichungstag der Anmeldung:
**23.01.80 Patentblatt 80/2**

(45) Bekanntmachung des Hinweises auf die Patenterteilung:
**13.01.82 Patentblatt 82/2**

(84) Benannte Vertragsstaaten:
**CH FR GB IT NL SE**

(56) Entgegenhaltungen:
**DE - A - 2 641 851**
**US - A - 3 203 683**
**FR - A - 2 394 783**
**US - A - 3 418 597**
**US - A - 3 584 579**
**US - A - 3 609 735**

(73) Patentinhaber: **Precitec Gesellschaft für Präzisionstechnik und Elektronik mbH & Co. Entwicklungs- und Vertriebs-KG Waldstrasse 20 D-7570 Baden-Baden 19 (DE)**

(72) Erfinder: **Schmall, Karl-Heinz Moncalierstrasse 5 D-757 Baden-Baden (DE)**

(74) Vertreter: **Roesner, Werner MESSER GRIESHEIM GmbH Patentabteilung Hanauer Landstrasse 330 D-6000 Frankfurt/Main 1 (DE)**

Courier Press, Leamington Spa, England.

## Anordnung zur Messung des Abstandes zwischen einem metallischen Werkstück und einem Bearbeitungswerkzeug

Die Erfindung betrifft eine Anordnung zur Messung des Abstandes zwischen einem metallischen Werkstück und einem relativ zu diesem bewegten Bearbeitungswerkzeug, insbesondere zur Abstandsregelung von Autogen-, Plasma- und Laserschneidmaschinen, wobei dem Werkzeug wenigstens eine der Oberfläche des zu bearbeitenden Werkstücks zugewandte kapazitive oder induktive Fühlereinrichtung zugeordnet ist, deren Reaktanz durch Verringerung, bzw. Vergrößerung des Abstandes zum Werkstück beeinflußbar eine Elektrode aufruist, die in Verhindung unif deui Werkstück eine evofe Reaktanz bisldet und ist und wobei weiterhin die Fühlereinrichtung an einen elektrischen Schaltkreis zur Auswertung der Reaktanzänderungen angeschlossen ist.

Derartige Anordnungen sind seit langem bekannt und gebräuchlich. Als Fühlereinrichtung werden dabei entweder Elektroden verwendet, welche mit dem als Gegenelektrode verwendeten Werkstück eine reziprok abstandsproportionale Kapazität bilden. Daneben sind auch induktive Fühlereinrichtungen bekannt, die eine Spule aufweisen, welche durch ein metallisches Werkstück abstandproportional im Induktivitätswert verändert werden. Solche Anordnungen sind z.B. in der britischen Patentschrift 840,275 (British Oxygen Company, Ltd.), der US-Patentschrift 3,153,109 (C. F. Steventon), der US-Patentschrift 3,217,204 (H. M. Nance), der US-Patentschrift 3,596,050 (George H. Tikijian), sowie der deutschen Auslegeschrift 1,914,728 (Messer Griesheim GmbH) beschrieben.

Die Auswertung der abstandsproportionalen Änderung der verwendeten Fühlerkapazität, bzw. der Fühlerinduktivität wird dabei in der Regel derart vorgenommen, daß der Fühler als frequenzbéstimmendes Element in einen Schwingkreis geschaltet ist. Jede Abstandsänderung führt damit zu einer Verstimmung des Schwingkreises. Diese Frequenz-änderung läßt sich dann ohne Schwierigkeiten in bekannter Weise z.B. durch einen Diskriminator in Gleichspannungssignale umwandeln, die zur Anzeige und/oder Abstandsregelung verwendet werden können.

Ein schwerwiegender Nachteil der bekannten Anordnungen besteht in erster Linie darin, daß die Fühleranordnungen nicht nur durch in· Bearbeitungsrichtung liegende Abstandsänderungen zum Werkstück beeinflußt werden, sondern daß auch eine seitliche Annäherung des Werkstücks zu einer Beeinflussung der Fühlerkapazität oder Fühlerinduktivität führt. Dementsprechend haben sich die bekannten Anordnungen zur Abstandsmessung in erster Linie für Analgen zum Schneiden von Metallplatten durchgesetzt. Die Bearbeitung von Werkstücken mit stark welliger Oberfläche ist mit den bekannten Anordnungen dagegen nicht möglich, weil hier die seitliche, d.h. also auch die parallel zur Bewegungsrichtung verlaufende Beeinflussung des Fühlers durch eine Materialerhebung dazu führt, daß der Fühler eine Annäherung an das Werkstück "meldet" und dadurch das Bearbeitungswerkzeug vom Werkstück entfernt wird, ohne daß sich tatsächlich im unmittelbaren Bereich unter dem Fühler, bzw. dem Werkstück eine Abstandsänderung ergeben hätte.

Darüberhinaus ist aus der DE—A—2 641 851 eine Einrichtung zur kapazitiven Abstandsmessung bekannt, bei der zwei Fühler neben dem Werkzeug vorgesehen sind und im Bereich von in Bearbeitungsrichtung liegenden Werkstückerhebungen aus den Abstandsmessungen ein Signal abgeleitet wird, das zur Schwenkung eines Werkzeuges verwendet wird. Ein Hinweis auf eine Kompensation der Störungen, die durch parallel zur Bearbeitungsrichtung liegenden Werkstückerhebungen hervorgerufen werden, enthält diese DE—A—2 641 851 nicht.

Ferner ist aus der US—A—3 609 735 eine Einrichtung zur Dicken-messung bekannt bei der eine Kombination von induktivem und kapazitiveß Fühler eingesetzt wird und Abstandsänderungen durch betragsmä—ig gleiche, jedoch elektrisch gegenläufige Änderungen des induktiven bzw. kapazitiven Blindwiderstandes kompensiert werden.

Der Erfindung liegt die Aufgabe zugrunde, eine eingangs beschriebene Anordung zur Messung des Abstandes derart zu verbessern, daß auch Werkstücke mit parallel zur Werkzeugbahn verlaufenden Erhebungen einwandfrei bearbeitet werden können.

Erfindungsgemäß wird dies dadurch erreicht, daß eine Kompensations-Fühleranordnung vorgesehen ist, welche zur Beeinflussung durch parallel zur Bewegungsrichtung des Werkzeuges verlaufende Erhebungen des Werkstückes seitlich am Werkzeug angeordnet ist und due Electrodesowie ein durch das Werkstück beeinflußbare zweite Reaktanz aufweist, daß ferner die Elektrode und die zweite Reaktanz in Series geschaltet sind und eine der beiden Reaktanzen kapazitiv und die andere induktiv ist, und daß beide Reaktanzen derart dimensioniert und· electrisch gegeneinander geschaltet sind, daß bei einer Annäherung der Elektrode und der zweiten Reaktanz an Erhebungen des Werkstückes durch die Elektrode hervorgerufene Störreaktanzen durch gegenläufige Änderung der Größe der zweiten Reaktanz kompensierbar sind.

Bei einer kapazitiven Meßanordnung wird dabei also eine induktive Kompensations-Fühleranordnung vorgesehen werden. Die Bemessung der Induktivität hängt ersichtlicherweise von der Anordnung der Fühleranordnung am Werkzeug, sowie von der Anordnung des eigentlichen Fühlers und dessen Dimensionierung ab. Die Dimensionierung läßt sich im Einzelfall relative einfach dadurch empirisch ermitteln, daß bei konstantem Abstand der Fühlereinrichtung zum Werkstück eine seitlich Annäherung des Werkstücks simuliert wird und daß dabei dann die Veränderung des Blindwiderstandes der Fühlereinrichtung, bzw. die Frequenzänderung des Oszillators gemessen wird. Die Dimensionierung des Blindwiderstandswerts der Kompensations-Fühleranordnung wird dann derart bestimmt, daß das durch seitliche Annäherung bewirkte Fehlersignal wieder kompensiert wird. Sofern die Kompensations-Fühleranordnung eine Induktivität ist, welche in Serie mit einer Elektrode zur kapazitiven Abstandsmessung geschaltet wird, bewirkt die seitliche Annäherung eine Vergrößerung des Kapazitätswerts. Gleichzeitig reduziert sich jedoch die Induktivität der Kompensations-Fühleranordnung, da diese durch das seitlich sich annähernde Werkstück in Folge gegenläufiger Wirbelstromwirkung beeinflußt wird.

Gleichzeitig mit der Vergrößerung der Kapazität tritt deshalb eine proportionale Vergrößerung der Induktivität auf, so daß sich die Auswirkungen der seitlichen Annäherung an das Werkstück kompensieren lassen. Aus der Formel

$$f = \frac{1}{2\pi\sqrt{L \cdot C}}$$

ist dabei ersichtlich, daß bei proportionalem Verhalten von L und C, d.h. also von Induktivität und Kapazität die Resonanzfrequenz der Anordnung konstant bleibt, wenn eine Erhöhung des Kapazitätswerts einer betragsmäßig gleichen Verringerung des Induktivitätswerts bei seitlicher Annäherung gegenübersteht. Das gleiche gilt für die Blindwiderstände der jeweiligen Induktivität, bzw. Kapazität, so daß nicht nur bei Einbeziehung der Fühlereinrichtung, bzw. der Kompensations-Fühleranordnung in einen Schwingkreis, sondern auch bei einer Meßauswertung z.B. in an sich bekannten Meßbrückenschaltungen eine Kompensation von Fehlsignalen durch seitliche Annäherung erreichbar ist.

Der Einfluß einer seitlichen Annäherung auf die Fühlereinrichtung läßt sich ersichtlicherweise nicht allgemein gultig beschreiben oder vorhersehen. So hängt z.B. bei einer kapazitiven Abstandselektrode der Einfluß entscheidend von der Anordnung der Elektrode am Werkzeug, sowie dem Verhältnis zwischen der dem Werkstück unmittelbar zugewandten wirksamen oberfläche der Elektrode, sowie der seitlich Wirksam werdenden Fläche ab. Je größer die der unter dem Werkzeug liegenden Oberfläche des Werkstükkes zugewandte Elektrodenfläche im Vergleich zur seitlichen Fläche ist, destro geringer werden die Störeinflüsse sein.

Andererseits wird eine zurückgezogen am Werkzeug über der Elektrode angeordnete Spulenanordnung auch geringer Beeinflussung bei einer "normalen" Annäherung an das Werkstück unterworfen sein.

In jedem Fall läßt sich jedoch durch geometrische Anordnung der Fühlereinrichtung einerseits und der Kompensations-Fühleranordnung andererseits erreichen, daß eine Annäherung in der "normalen" Werkzeug-Vorschubrichtung zu einer überproportionalen Veränderung der Fühlereinrichtung und damit zur Abgabe eines verwertbaren, der Abstandsänderung proportionalen Signals führt und daß auf der anderen Seite eine Seitliche Annäherung zu einer etwa proportionalen Beeinflussung der Fühlereinrichtung und der Kompensations-Fühleranordnung führt, so daß sich insgesamt eine Kompensation ergibt.

In der Praxis läßt sich die Erfindung bei Brenn-Schneidmaschinen (z.B. Plasma oder Laser) besonders vorteilhaft realisieren, wenn zur kapazitiven Abstandsmessung eine Elektrode vorgesehen ist, die als etwa kreisringförmige Scheibe ausgebildet ist, welche etwa parallel zum Werkstück angeordnet ist und die Brenner-Düse an deren unterem Ende Konzentrisch umgibt und wenn die Induktivität eine ebenfalls konzentrisch zur Brenn-Düse an deren unterem Ende angeordnete Spule ist, wobei die Spule vom Werkstück hergesehen hinter der Elektrode plaziert ist. Die Elektrode schirmt damit praktisch die Spule von einer zu großen Beeinflussung bei vertikaler Annäherung an das Werkstück ab. Bei einer seitlichen Annäherung wird die Spule jedoch voll durch das Werkstück beeinflußt, während die scheibenförmige Elektrode nur eine relativ geringe, dem Werkstück seitlich zugewandte Oberfläche aufweist und deshalb die zu kompensierende Kapazitätsänderung von Haus aus relativ gering ist.

In der Praxis läßt sich eine derartige Anordning besonders vorteilhaft realisieren, wenn an der Brenner-Düse ein Ringkörper aus einem isolierenden Material, vorzugsweise aus Keramik vorgesehen ist, wenn am Ringkörper an seiner dem Werkstück zugewandten Seite die Elektrode angeordnet ist, und wenn die Spule Konzentrisch um den Ringkörper gewickelt ist. Auf diese Weise Bilden Induktivität und Kapazität eine einfach herstellbare und in der Relativanordnung stabile bauliche Einheit, die auch im Betrieb robust und zuverlässig eingesetzt werden kann. Die Verwendung eines keramischen Werkstoffs als Träger für die Fühlereinrichtung, sowie die Kompensations-Fühleranordnung, d.h. also für Kapazität und Induktivität erlaubt darüber hinaus die Anordnung im Bereich der Brenner-Düse, wodurch sich hohe Meßgenauigkeit erreichen läßt.

Insgesamt schafft die Erfingung eine einfachst und unter Verwendung weniger passiver Bauelemente wirtschaftlich und robust herstellbare Anordnung, die ohne weiteres an die verschiedensten Elektrodenformen, Auswertungseinrichtungen, Werkzeugformen und dergleichen angepaßt werden kann.

Der technische Fortschritt und der erfinderische Inhalt des Anmeldungsgegenstands werden dabei nicht nur durch die genannten Einzelmerkmale, sondern ersichtlicherweise vor allem auch durch Kombination und Unterkombination der Verwendung findenden Merkmale gewährleistet.

Die Erfindung ist im folgenden in einem Ausführungsbeispiel anhand der Zeichnungen näher erläutert. Es zeigen:

Fig. 1 Den schematischen Schaltungsverlauf einer Anordnung mit den Merkmalen der Erfindung, und

Fig. 2 die schematische Seitanansicht einer Brenner-Düse mit einer Anordnung gemäß Fig. 1.

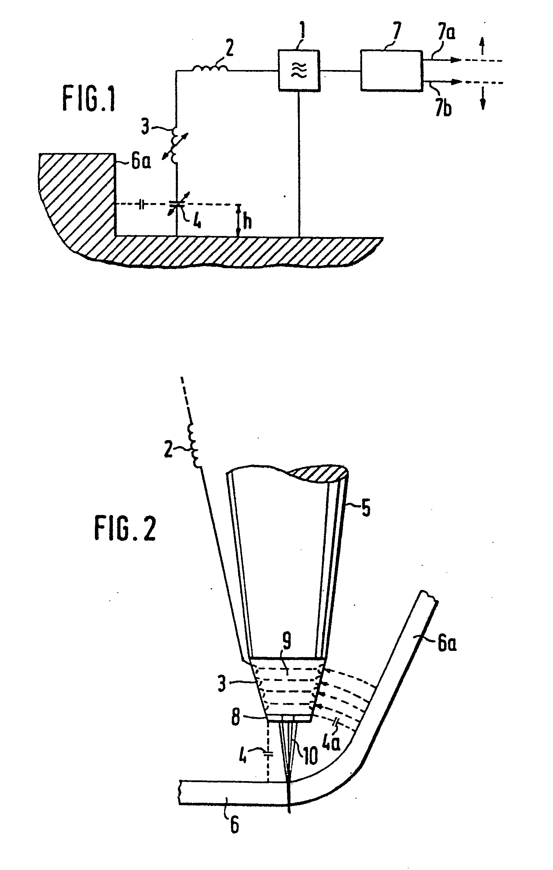

Gemäß Fig. 1 ist ein Oszillator 1 eingangsseitig frequenzbestimmend an eine Spule 2, eine Kompensationsspule 3 und an ein Elektroden-Werkstückkapazität 4 angeschlossen. Die Kapazität 4 wird durch die einander gegenüberliegenden Flächen einer an einem Werkzeug 5 (Fig. 2) angeordneten Ringelektrode 8 und einem zu bearbeitenden Werkstück 6 gebildet. Jede vertikale Abstandsänderung zwischen Werkzeug 5 und Werkstück 6 führt zu einer Veränderung der Kapazität 4, wodurch die Frequenz des Oszillators 1 verändert wird. Der Ausgang des Oszillators 1 ist an eine Diskrimnatorschaltung 7 angeschlossen, in welcher die Frequenzschwankungen in Stellsignale umgeformt werden. Die Stellsignale liegen an den beiden Ausgängen 7a und 7b an und bewirken in bekannter Weise eine Nachregelung des Abstandswerkzeugs 5 vom Werkstück 6 in Abhängigkeit von den Frequenzschwankungen des Oszillators 1, bzw. den abstandsproportionalen Kapazitätsschwankungen der Kapazität 4.

Eine seitliche Annäherung des Werkzeugs 5 an eine Werkstückflanke 6a führt dazu, daß sich zusätzlich zur Kapazität 4 eine Störkapazität 4a bildet, die zu einer Kapazitätsänderung—und damit zur Frequenzänderung—führt, welche nicht mehr proportional dem Abstand h zwischen Werkzeug 5 und Werkstück 6 ist.

Fig. 2 zeigt eine Brenner-Düse 5 als Werkzeug zur Bearbeitung eines metallischen Werkstücks 6. Die Störkapazität 4a bildet sich dabei vor allem zwischen der seitlichen Werkstückflanke 6a und der seitlichen Kante einer Ringelektrode 8, die zusammen mit dem gegenüberliegenden Abschnitt des Werkstücks 6 die Kapazität 4 bildet. Die Kompensationsspule 3 ist ersichtlicherweise zusammen mit der Ringelektrode 8 auf einem Keramikkörper 9 angeordnet, welcher die Brenner-Düse 5 umgibt. Jede seitliche Annäherung an die Werkstückflanke 6a führt deshalb nicht nur zur Vergrößergung der Störkapazität 4a, sondern gleichzeitig zu einer Beeinflussung der Induktivität der Kompensationsspule 3. Beim Ausführungsbeispiel beträgt die Kapazität 4 beim Sollabstand von 1 mm etwa 1 pF, die Induktivität der Kompensationsspule 3 etwa 5 $\mu$H, die Induktivität der Spule 2 etwa 30 $\mu$H und die Frequenz des Oszillators 1 ca. 7 bis 8 MHz, je nach Größe der Kapazität 4.

Ersichtlicherweise führt jede seitliche Beeinflussung durch eine Werkstückflanke 6a zu einer Erhöhung der Störkapazität 4a und gleichzeitig zu einer entgegenwirkenden Verringerung der Induktivität der Kompensationsspule 3. Die Störeinflüsse der Störkapazität 4a werden damit voll kompensiert.

Die Spule 2 ist in einem Abstand zur Brenner-Düse angeordnet, um sie aus dem unmittelbaren Einflußbereich der heißen Brennergase 10 zu nehmen. Zum Schutz der Kompensationsspule 3 ist diese in gewindeförmig angeordneten Vertiefungen des Keramikkörpers 9 verlegt und durch isolierendes Material nach außen abgedeckt.

Selbstverständlich läßt sich die geometrische Ausbildung der Ringelektrode 8 und der Kompensationsspule 3 entsprechend den Anforderungen im Einzelfall ändern So kann die Kompensationsspule 3 z.B. nur einseitig an der Brenner-Düse 5 angeordnet werden oder es können separat gehaltene Ringelectroden 8 verwendet werden, wie dies allgemein bekannt und gebräuchlich ist.

Statt der beim Ausführungsbeispiel gezeigten Serieschaltung aus einer Fühlerkapazität und einer Kompensationsspule läßt sich selbstverständlich auch der Fühler in bekannter Weise als Induktivität ausbilden und dann entsprechend eine Kompensations-Kapazität anordnen. Dem Fachmann sind derartige Maßnahmen ohne weiteres geläufig. Außerdem ist auf geringfügige weitere Störkapazitäten oder Kreisinduktivitäten von untergeordneter Bedeutung weder in der Beschreibung noch in der Zeichnung Rücksicht genommen. So kann z.B. die kreisringförmige Elektrode zu geringfügigen induktiven Störeinflüssen führen und es können sich auch zwischen den einzelnen Wicklungen der Kompensationsspule und der Werkstückflanke 6a kleinere Streukapazitäten bilden, die das Meßergebnis jedoch nur geringfügig beeinflussen. Auch ohm"sche Widerstände in den Zuleitungen oder in der Spule sind beim Schaltbild gemäß Fig. 1 nicht berücksichtigt; die wirken sich jedoch in der Anordnung nicht aus.

**Patentansprüche**

1. Anordnung zur Messung des Abstandes zwischen einem metallischen Werkstück und einem relativ zu diesem bewegten Bearbeitungswerkzeug, insbesondere zur Abstandsregelung von Autogen-, Plasma- under Laserschneidmaschinen, wobei dem Werkzeug wenigstens eine der Oberfläche des zu bearbeitenden Werkstücks zugewandte kapazitive und/oder induktive Fühlereinrichtung zugeordnet ist, deren Reaktanz durch Verringerung bzw. Vergrößergung des Abstandes zum Werkstück beeinflußbar ist und wobei weiterhin die Fühlereinrichtung eine Elektrode (8) aufweist, die in Verbindung mit dem Werkstück (6) eine erste Reaktanz bildet und an einen elektrischen Schaltkreis zur Auswertung der Reaktanz änderungen angeschlossen ist,

dadurch gekennzeichnet, daß ferner eine Kompensations-Fühleranordnung (3) vorgesehen ist, welche zur Beeinflussung durch parallel zur Bewegungsrichtung des Werkzeuges (5) verlaufende Erhebungen (6a) des Werkstückes (6) seitlich am Werkzeug (5) angeordnet ist und die Elektrode (8) sowie eine durch das Werkstück beeinflußbare zweite Reaktanz aufweist, daß ferner die Elektrode (8) und die zweite Reaktanz (3) in Serie geschaltet sind und eine der beiden Reaktanzen kapazitiv und die andere induktiv ist, und daß beide Reaktanzen derart dimensioninert und elektrisch gegeneinander geschaltet sind, daß bei einer Annäherung der Elektrode (8) und der zweiten Reaktanz an Erhebungen (6a) des Werkstückes (6) durch die Elektrode (8) hervorgerufene Störreaktanzen durch gegenläufige Änderung der Größe der zweiten Reaktans kompensierbar sind.

2. Anordnung nach Anspruch 7, mit einer kapazitiven Fühlereinrichtung, einer Kompensationsinduktivität und einer Brenner-Düse als Werktung, dadurch gekennzeichnet, daß die Elektrode (8) eine etwa kreisförmige und/oder kreisringförmige Scheibe ist, die etwa parallel zum Werkstück (6) angeordnet ist und die Brenner-Düse (5) an deren unterem Ende konzentrisch umgibt, und daß die Kompensations-Induktivität eine ebenfalls konzentrisch zur Brenner-Düse (5) an deren unterem Ende angeordnete Spule (3) ist, wobei die Spule (3) vom Werkstück her gesehen hinter der Elektrode (8) plaziert ist.

3. Anordnung nach Anspruch 2, dadurch gekennzeichnet,

daß an der Brenner-Düse (5) ein Ringkörper (9) aus einem isolierenden Material, vorzugsweise aus Keramik vorgesehen ist, daß am Ringkörper (9) an seiner dem Werkstück (6, 6a), zugewandten Seite die Elektrode (8) angeordnet ist, und daß die Spule (3) konzentrisch um den Ringkörper (9) gewickelt ist.

## Claims

1. Arrangement for measuring the distance between a metallic workpiece and a processing tool moved relative to the workpiece, especially for adjusting the distance of acetylene, plasma and laser cutting machines whereby at least one capacitive and/or inductive sensing device facing the surface of the workpiece to be processed is provided to the tool; whereby the reactance of the sensing device can be affected by reducing or increasing the distance to the workpiece and whereby, the sensing device comprising an electrode which establish a first reactance by connection with the workpiece and whereby, furthermore the sensing device is connected to an electrical circuit to evaluate the changes of the reactance of the sensing device, characterized in that a compensation sensing arrangement (3) is provided in addition to the sensing device, which is arranged laterally on the tool (5) to be affected by elevations (6a) of the workpiece (6) running parallel to the direction x of movement of the tool (5) and which including the electrode (8) and the second reactance which can be affected by the workpiece and whereby the electrode and the second reactance are connected in series and one of the reactances is inductive and the other is capacitive and in that the reactances are dimensioned and electrically connected in opposition in such a way that a predetermined lateral approach of the electrode (8) and the second reactance to elevations (6a) of the workpiece (6) produces interference reactances which interference reactances can be compensated by changes of the second reactances, whereby changes and interference reactances are numerically about equal, but are electrically oppositely directed.

2. Arrangement according to Claim 1 with a capacitive sensing device, a compensation inductance and a burner nozzle or a tool characterized in that the electrode (8) is a somewhat circular and/or circular annular disc which is arranged about parallel to the workpiece (6) and concentrically surrounds the burner nozzle (5) at its bottom end and in that compensation inductance is a coil (3) also concentrically arranged to the burner nozzle (5) at its bottom end whereby the coil (3) is placed behind the electrode (8) seen from the workpiece (6).

3. Arrangement according to Claim 2, characterized in that an annular body (9) of an insulating material, preferably ceramic, is provided on the burner nozzle (5), in that the electrode (8) is arranged on the annular body (9) on its side facing the workpiece (6, 6a) and in that the coil (3) is concentrically wound around the annular body (9).

## Revendications

1. Dispositif pour mesurer la distance entre une pièce d'oeuvre métallique et un outil de traitement déplacé par rapport à cette pièce, notamment pour régler la distance de machines à découper à l'autogène, au plasma et au laser, dispositif dans lequel au moins un moyen capacitif et/ou inductif de détection, orienté vers la surface de la pièce d'oeuvre à traiter, est associé à l'outil, la réactance de ce moyen de détection étant susceptible d'être influencée lorsque sa distance à la pièce d'oeuvre diminue ou bien augmente, ce dispositif de détection comportant en outre une électrode qui, en liaison avec la pièce d'oeuvre, constitue une première réactance et qui est raccordée à un circuit électrique pour l'exploitation des variations de réactance, dispositif caractérisé en ce qu'il est en outre prévu un moyen de détection de compensation (3) disposé latéralement sur l'outil (5) pour être influencé par les parties en élévation (6a) de la pièce d'oeuvre (6) s'étendant parallèlement à la direction de déplacement de l'outil (5), et qui comporte l'électrode (8) ainsi qu'une seconde réactance susceptible d'être influencée par la pièce d'oeuvre, l'électrode (8) et cette seconde réactance étant en outre branchées en série, l'une des deux réactances étant capacitive et l'autre inductive, et les deux réactances étant dimensionnées et branchées électriquement l'une par rapport à l'autre de telle sorte, que lors d'un rapprochement de l'électrode (8) et de la seconde réactance vers les parties en élévation (6a) de la pièce d'oeuvre (6), les réactances parasites suscitées par l'électrode (8) sont susceptibles d'être compensées par une variation en sens inverse de la grandeur de la seconde réactance.

2. Dispositif selon la revendication 1, avec un moyen de détection capacitif, une inductance de compensation, et une buse de brûleur comme outil, dispositif caractérisé en ce que l'électrode (8) est un disque approximativement circulaire et/ou annulaire, disposé à peu près parallèlement à la pièce d'oeuvre (6) et qui entoure concentriquement l'extrémité inférieure de la buse (5) du brûleur, tandis que l'inductance de compensation est une bobine (3) disposée également concentriquement à l'extrémité inférieure de la buse (5) du brûleur, cette bobine (3), vue à partir de la pièce d'oeuvre (6), étant placée derrière l'électrode (8).

3. Dispositif selon la revendication 2, caractérisé en ce qu'il est prévu contre la buse (5) du brûleur, une structure annulaire (9) en un matériau isolant, de préférence en céramique, l'electrode (8) étant disposée sur la face en regard de la pièce d'oeuvre (6, 6a) de cette structure annulaire (9), tandis que la bobine (3) est bobinée concentriquement autour de cette structure annulaire (9).

FIG.1

2

1

7  7a

3

6a

4  h

7b

FIG.2

2

5

9

3

8

4  4a

10

6a

6